# EUROPÄISCHE PATENTSCHRIFT

(11) **EP 1 652 287 B1**
(45) Veröffentlichungstag und Bekanntmachung des Hinweises auf die Patenterteilung: **23.02.2011**
(21) Anmeldenummer: 04737407.9
(22) Anmeldetag: 05.08.2004
(51) Int. Cl.: H02M 3/335

(54) **SCHALTWANDLER**
SWITCHING CONVERTER
CONVERTISSEUR A COMMUTATION

(30) Priorität: 05.08.2003 AT 12402003
(43) Veröffentlichungstag der Anmeldung: 03.05.2006
(73) Patentinhaber: Siemens Aktiengesellschaft, 80333 München (DE)
(72) Erfinder: SCHÖNLEITNER, Arnold, A-1130 Wien (AT); HALLAK, Jalal, Abdulazim, 1220 Wien (AT)
(74) Vertreter: Peham, Alois
(86) Internationale Anmeldenummer: PCT/AT2004/000277
(87) Internationale Veröffentlichungsnummer: WO 2005/013470

(56) Entgegenhaltungen:
- US-A- 5 408 402
- US-A- 5 768 118
- US-A- 5 953 219
- US-A1- 2003 103 360

## Beschreibung

Die Erfindung bezieht sich auf einen Sperrwandler, bei welchem eine Eingangsspannung mittels zumindest eines gesteuerten Schalters an zumindest eine Primärwicklung eines Übertragers schaltbar ist, mit einer Ansteuerschaltung zur Ansteuerung des Schalters, welcher ein Regelsignal im Sinne einer Regelung zumindest der Ausgangsspannung zugeführt ist, wobei die Spannungsversorgung der Ansteuerschaltung einerseits über die Flussspannung einer Hilfswicklung, des Übertragers, einen Gleichrichter, einen Kondensators und einen Längsregler und andererseits, von der Eingangsspannung ausgehend, über einen Strompfad und einen Speicherkondensator erfolgt.

Bei derartigen Schaltwandlern erhält die Ansteuerschaltung über die Hilfswicklung, welche in der Leitphase des Wandlers arbeitet ,eine gleichgerichtete Ausgangsspannung über einen Längsregler. Um auch das Anlaufen der Ansteuerschaltung bei dem Anschalten an die Eingangsspannung zu gewährleisten, liegt der Versorgungsspannungseingang der Ansteuerschaltung zusätzlich über einen relativ hochohmigen Strompfad an der Eingangsspannung.

Das der Erfindung zu Grunde liegende Problem ergibt sich, wenn ein hoher Schwankungsbereich der Eingangsspannung vorliegt, bei welcher der Wandler arbeiten soll. Die Eingangsspannung wird üblicherweise durch Gleichrichtung einer Netzspannung gewonnen und auch Zwischenkreisspannung genannt. Bei einem Bereich der Wechselspannung zwischen 85 bis 264 Volt erhält man einer Eingangsgleichspannung von circa 115 bis 373 Volt. Nun wird eine gewisse Mindestspannung der Hilfsversorgung für die Ansteuerschaltung gefordert, beispielsweise 15 Volt. Diese Spannung muss bei der niedrigsten Netzspannung gewährleistet sein. Daraus folgt aber, dass an dem Längsregler bei der höchstvorkommenden Eingangsspannung eine hohe Längsspannung von etwa 34 Volt anliegt, sodass bei einem Strombezug der Ansteuerschaltung von beispielsweise 25 mA eine Verlustleistung von 0,84 Watt anfällt. Eine solche Verlustleistung ist insbesondere bei kleinen Geräten unerwünscht.

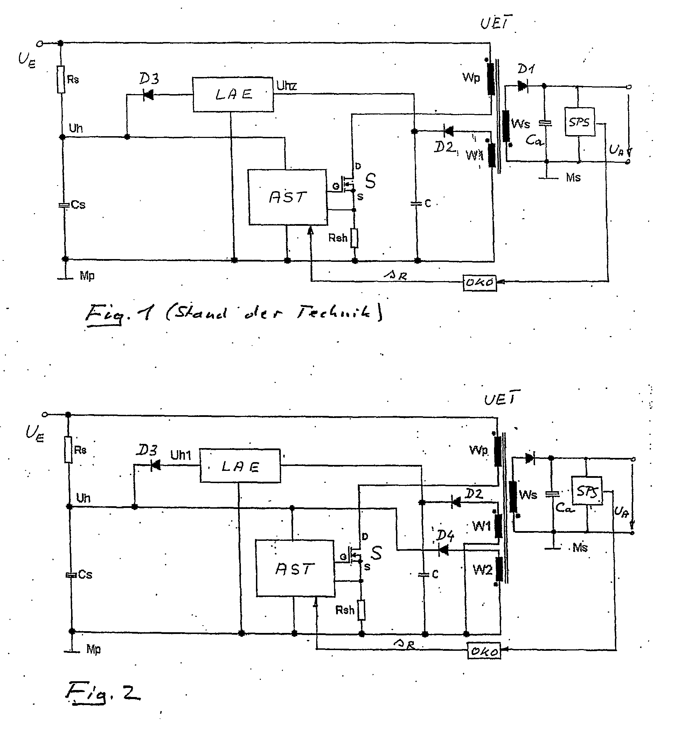

Eine Ausführungsform nach dem Stand der Technik ist in Fig.1 näher erläutert. Eine Eingangswechselspannung U_{E} liegt über einen gesteuerten Schalter S an einer Primärwicklung Wp eines Übertragers UET. Der Schalter S wird von einer Ansteuerschaltung AST angesteuert, wobei diese Ansteuerschaltung Information über den Strom durch den Schalter S und die Primärwicklung Wp mit Hilfe eines Sensorwiderstandes Rsh erhält.

Sekundärseitig wird die Spannung einer Sekundärwicklung WS mit Hilfe einer Gleichrichterdiode D1 gleichgerichtet und eines Kondensators Ca geglättet und steht als Ausgangsspannung U_{A} zur Verfügung. Ein Spannungssensor SPS liefert über einen Optokoppler ein Regelsignal S_{R} an die Ansteuerschaltung, um in bekannter Weise eine Spannungsregelung zu verwirklichen. Es kann aber auch eine Regelung von der Primärseite her erfolgen und auch Eingangs/Ausgangsströme können in die Regelung einbezogen sein. Die Ansteuerschaltung erhält ihre Betriebsspannung auf zweierlei Weise: zum einen wird die Eingangsgleichspannung U_{E} über einen Vorwiderstand Rs der Ansteuerschaltung AST zugeführt, wobei ein Speicherkondensator Cs verwendet wird. Zum anderen wird die Flussspannung einer Hilfswicklung W1 mit Hilfe einer Diode D2 und eines Kondensators C gleichgerichtet und als Spannung Uhz einem Längsregler LAE zugeführt, von wo die geregelte Spannung über eine Entkopplungsdiode D3 gleichfalls zum Versorgungsspannungseingang der Ansteuerschaltung AST gelangt. Mit M_{P} ist die primäre und mit Ms die sekundäre Masse bezeichnet.

Wird der Schaltwandler nach Fig. 1 an das Netz gelegt, so erhält er zunächst zum Anlauf die an dem Speicherkondensator Cs liegende Spannung und nach dem Hochlaufen des Schaltnetzteils versorgt sich dieses über die Hilfswicklung W1, die Diode D2 und Längsregler LAE selbst mit der Hilfsversorgungsspannung. Wie bereits erwähnt, liegt bei einer hohen Eingangsspannung an dem Längsregler LAE auch eine hohe Längsspannung, was zu unerwünschten Verlusten führt.

Im folgenden seien zum allgemeinen Stand der Technik noch die nachstehenden Dokumente genannt:
Die WO 93/23974 zeigt einen Schaltwandler, der eine Hilfsversorgungswicklung besitzt. Über diese Wicklung kann im Sperrwandlermodus eine Hilfsversorgungsspannung gewonnen werden. Durch den Einsatz von zwei Dioden kann darüber hinaus aus dieser Wicklung auch ein Abbild der Ausgangsspannung für Regelungszwecke gewonnen werden. Über dies ist die allgemein übliche Spannungsversorgung aus der Eingangsspannung über einen Spannungsteiler gleichfalls vorhanden.

Aus der DE 3 419 972 A1 geht ein Schaltnetzteil hervor, das wahlweise an einer Netzspannung oder einer Batteriespannung betrieben werden kann. Ebenso wie bei der zuvor genannten WO 93/23974 ist auch hier eine Hilfswicklung vorgesehen, welche eine Sperrspannung zur Versorgung der Ansteuerung (nach Gleichrichtung) liefert. Weiters besitzt dieses Schaltnetzteil zwei getrennte Priniärwicklungen, wobei eine Primärwicklung für den Betrieb an der gleichgerichteten Netzwechselspannung und die andere Primärwicklung für den Betrieb an einer 14 Volt Batterie vorgesehen ist. Schließlich kann noch eine weitere Hilfswicklung vorhanden sein, deren Spannung zu Regelzwecken verwendet und dafür einer Regelschaltung zugeführt wird.

Das Dokument JB 09-285121 offenbart zwei voneinander unabhängige Wandlersysteme, die jedoch eine funktionelle Einheit bilden und so zueinander synchronisiert werden sollen, dass eine definierte sequenzielle Reihenfolge beim Spannungs-Hochlauf erzielt wird. Lediglich eines der beiden Wandlersysteme besitzt eine Hilfswicklung, deren Spannung nach Gleichrichtung zur Spannungsversorgung der Ansteuerschaltung verwendet wird. Das andere Wandlersystem kann von sich aus überhaupt nicht anlaufen sondern benötigt das hochgefahrene zweite Wandlersystem.

Der Schaltwandler nach der US 4 156 273 besitzt zwei Hilfswicklungen. Eine dieser Hilfswicklungen liefert nach Gleichrichtung eine Versorgungsspannung für die Ansteuerschaltung, wobei diese Versorgungsspannung über einen gesteuerten Schalter ein oder ausgeschaltet werden kann. Die andere Hilfswicklung hat mit einer Spannungsversorgung nichts zu tun, sondern die daraus abgeleitete Spannung soll das Schaltverhalten hinsichtlich einer gewünschten Kurvenform beeinflussen.

Bei der US 4 630 186 wird als Schalttransistor ein bipolarer Transistor verwendet, der ein relativ träges Schaltverhalten zeigt. Um ein rasches Ausschalten dieses Schalttransistors zu ermöglichen, ist eine Hilfswicklung vorgesehen, welche eine Gegenspannung erzeugt, die über einen weiteren Schalttransistor zum geeigneten Zeitpunkt an die Steuerelektrode des Schalttransistors gelegt wird. Noch eine andere Hilfswicklung liefert eine Spannung, welche das Schaltverhalten beeinflussen soll. Dies Hilfswicklung zusammen mit einer Gleichrichterdiode und einem Kondensator wird als Spannungskorrekturschaltung bezeichnet.

Eine Aufgabe der Erfindung liegt in der Schaffung eines Schaltnetzteiles, welches für einen hohen Eingangsspannungsbereich geeignet ist und dennoch geringe Verluste bei der Erzeugung der Hilfsversorgungsspannung für die Ansteuerschaltung aufweist.

Diese Aufgabe wird mit einem Schaltwandler der eingangs genannten Art gelöst, bei welchen erfindungsgemäß der Ansteuerschaltung zur Spannungsversorgung zusätzlich die mittels eines Gleichrichters gleichgerichtete Sperrspannung einer Hilfswicklung zugeführt ist, wobei die gleichgerichtete Sperrspannung während des Betriebes zur Versorgung der Ansteuerschaltung herangezogen ist, solange sie einen ausreichenden Spannungspegel aufweist.

Bei einem Schaltwandler nach der Erfindung wird im Normalbetrieb die Ansteuerschaltung AST unter Ausnutzung der gleichgerichteten Sperrspannung versorgt, sodass kein Strom durch den Längsregler fließt. Dieser wird lediglich aktiv, wenn die Spannung an dem Ausgang stark absinkt, z. B. bei Kurzschluss oder während der Hochlaufphase. Es sei an dieser Stelle zusammengefasst, dass gemäß der Erfindung insgesamt drei Spannungsversorgungen für die Ansteuerschaltung vorliegen, nämlich erstens eine Versorgungsspannung, die von der hohen Eingangsspannung über einen hochohmigen Widerstand abgeleitet wird und dem Anlaufen der Ansteuerschaltung dient, zweitens einer Versorgungsspannung, die von der Flussspannung einer Hilfswicklung abgeleitet wird und die im Normalbetrieb die Ansteuerschaltung versorgt und drittens eine Versorgungsspannung, die von einer Sperrspannung einer Hilfswicklung abgeleitet wird und die dann zum Einsatz kommt, wenn der Ausgang kurz geschlossen oder zu stark belastet wird.

Bei einer vorteilhaften Ausführung der Erfindung ist vorgesehen, dass eine weitere Hilfswicklung des Überträgers für die Erzeugung der Sperrspannung vorgesehen ist, wobei diese Sperrspannung über einen Gleichrichter direkt zur Versorgung der Ansteuerschaltung herangezogen ist.

Diese Variante bietet den Vorteil, dass ein weiter Dimensionierungsspielraum gegeben ist, da man die Wicklungsanzahl der beiden Hilfswicklungen unterschiedlich wählen kann.

Einen weitere zweckmäßige Variante zeichnet sich dadurch aus, dass die Flussspannung sowie die Sperrspannung einer gemeinsamen Hilfswicklung entnommen sind, wobei Entkopplungs-/Gleichrichterdioden die Flussspannung gleichrichten und zu dem Längsregler führen, und weitere Entkopplungs-/Gleichrichterdioden die Sperrspannung gleichrichten und zu dem Versorgungsspannungsanschluss der Ansteuerschaltung führen.

Diese Ausführungsform bietet den Vorteil, dass lediglich eine einzige Hilfswicklung, die ohnedies nach dem Stand der Technik vorhanden ist, notwendig ist, und durch zwei zusätzliche Dioden die Erfindung realisiert werden kann.

Es ist überdies zweckmäßig, wenn der Ausgang des Längsreglers mit dem Speicherkondensator über eine Entkopplungsdiode verbunden ist. Dadurch sind auch Längsregler verwendbar, die eine Entkopplungsdiode oder äquivalente Mittel nicht integriert haben.

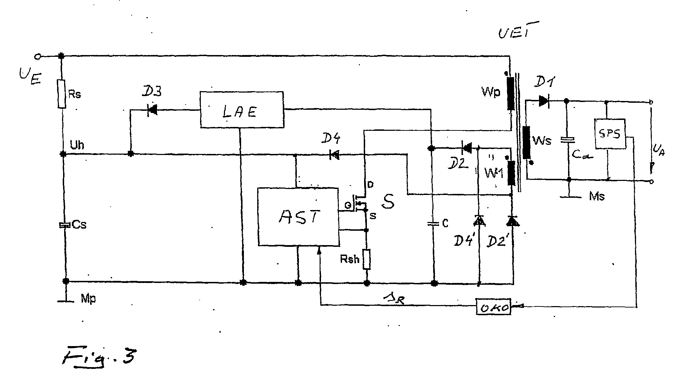

Die Erfindung ist in folgenden anhand beispielsweiser Ausführungsformen näher erläutert, die in der Zeichnung veranschaulicht sind. In dieser zeigen:
■ Fig.1 das Schaltbild eines Schaltwandlers nach dem Stand der Technik,
■ Fig. 2 eine erste Ausführungsform eines Schaltwandlers nach der Erfindung mit einer zusätzlichen Hilfswicklung und
■ Fig. 3 eine andere Ausführungsform der Erfindung mit einer einzigen Hilfswicklung.

Die Ausführung nach der Erfindung wie in Fig. 2 dargestellt, unterscheidet sich von der in Fig. 1 dargestellten Schaltung nach dem Stand der Technik dadurch, dass eine weitere Hilfswicklung W2 an dem Transformator vorgesehen ist, deren Sperrspannung verwendet wird, was durch einen gegenüber den Wicklungen WP und W1 versetzten Punkt angedeutet ist. Die Sperrspannung wird mit Hilfe einer Diode D4 gleichgerichtet und liegt an dem Speicherkondensator Cs.

Die Erfindung macht von der Tatsache Gebrauch, dass - bei einem Schaltnetzteil, das nach dem Sperrwandler-Prinzip arbeitet, bei geregelter Ausgangsspannung auch eine Sperr-(Hilfs-)spannung automatisch mitgeregelt ist, da die Übertragerwicklungen miteinander gekoppelt sind. Die Wicklung W2 ist nun so dimensioniert, dass die gewünschte Versorgungsspannung Uh der Ansteuerschaltung AST in Nennbetrieb größer als die Ausgangsspannung Uh1 des Längsregler LAE ist, z.B. um etwa um 1 bis 2 Volt. Die Spannungsausgänge Uh und Uh1 sind über die Entkopplungsdiode D3 miteinander verbunden und die Ansteuerschaltung AST wird von der Wicklung W2 ausgehend versorgt, solange die Spannung Uh größer als die Spannung Uh1 ist. Dies bedeutet, dass durch den Längsregler LAE kein Strom fließt und daher auch keine Verlustleistung in ihm auftritt.

Falls in besonderen Betriebszuständen, z.B. bei Überlast oder Kurzschluss, die Ausgangsspannung U_{A} absinkt, sinkt dementsprechend auch die Sperrspannung an der Sekundärwicklung WS und die gleichgerichtete Spannung wird kleiner als Uh1. In diesem Fall löst die Spannung Uh1 die Spannung Uh ab und der Längsregler LAE wird aktiv. Verlustleistung an dem Längsregler LAE entsteht daher nur in seltenen Betriebsfällen, de facto bei Kurzschluss am Ausgang. Im übrigen ist die Funktion, beispielsweise was das Anlaufen der Schaltung mit Hilfe des Widerstandes Rs und des Speicherkondensators Cs betrifft, die gleiche wie nach dem Stand der Technik.

Die in Fig. 3 gezeigte Schaltung nach der Erfindung zeigt, dass gegebenenfalls auch mit einer einzigen Hilfswicklung W1 das Auslangen gefunden werden kann. Man muss nur dafür Sorge tragen, dass der Hilfswicklung W1 sowohl die Flussspannung als auch die der geregelten Ausgangsspannung U_{A} proportionale Sperrspannung in geeigneter Weise und entkoppelt entnehmbar ist. Dies lässt sich, ausgehend von der Schaltung nach dem Stand der Technik, wie in Fig.1 gezeigt, durch Einführung einer Entkopplungsdiode D2', einer Gleichrichterdiode D4 und einer weiteren Entkopplungsdiode D4' erreichen. Wie bei der Ausführung nach Fig. 2 wird im Normalfall des Betriebes die Sperrspannung an der Hilfswicklung W1 verwendet, welche mittels der Dioden D4 bzw. D4' gleichgerichtet wird und an dem Speicherkondensator Cs liegt. Lediglich bei tatsächlichem Absinken der geregelten Ausgangsspannung U_{A}, z.B. im Kurzschlussfall, sinkt diese gleichgerichtete Sperrspannung und die Flussspannung an der Wicklung W1, die mit Hilfe der Dioden D2 und D2' gleichgerichtet wird, kommt über den Längsregler LAE zum Einsatz. Die Dioden D2' und D4' sind auch für die gegenseitige Entkopplung der beiden Spannungen erforderlich.

Es ist anzumerken, dass die Ausführung der Erfindung gemäß der Schaltung nach Fig. 3 den Vorteil zeigt, dass sie nur eine einzige Hilfswicklung W1 benötigt, jedoch ist diese Ausführung im Gegensatz zu der Schaltung nach Fig. 2 kritischer hinsichtlich ihrer Dimensionierung, da man nicht die Möglichkeit hat, die Sperr- und die Flussspannung unabhängig voneinander - durch Wahl des Windungsverhältnisses von W1 und W2 - zu bestimmen.

## Patentansprüche

1. Sperrwandler, bei welchem eine Eingangsspannung (U_{E}) mittels zumindest eines gesteuerten Schalters (S) an zumindest eine Primärwicklung (W_{P}) eines Übertragers (UET) schaltbar ist, mit einer Ansteuerschaltung (AST) zur Ansteuerung des Schalters, welcher ein Regelsignal (S_{R}) im Sinne einer Regelung zumindest der Ausgangsspannung zugeführt ist, wobei die Spannungsversorgung der Ansteuerschaltung (AST) einerseits über die Flussspannung einer Hilfswicklung, (W1) des Übertragers, einen Gleichrichter (D2), einen Kondensator (C) und einen Längsregler (LAE) und andererseits, von der Eingangsspannung (U_{E}) ausgehend, über einen Strompfad (Rs) und einen Speicherkondensator (Cs) erfolgt,
**dadurch gekennzeichnet, dass**
der Ansteuerschaltung (AST) zur Spannungsversorgung zusätzlich die mittels eines Gleichrichters (D4) gleichgerichtete Sperrspannung einer Hilfswicklung (W1: W2) zugeführt ist, wobei die gleichgerichtete Sperrspannung während des Betriebes zur Versorgung der Ansteuerschaltung herangezogen ist, solange sie einen ausreichenden Spannungspegel aufweise.

2. Sperrwandler nach Anspruch 1, **dadurch gekennzeichnet, dass** eine weitere Hilfswicklung (W2) des Übertragers (UET) für die Erzeugung der Sperrspannung vorgesehen ist, wobei diese Sperrspannung über einen Gleichrichter (D4) direkt zur Versorgung der Ansteuerschaltung (AST) herangezogen ist.

3. Sperrwandler nach Anspruch 1, **dadurch gekennzeichnet, dass** die Flussspannung sowie die Sperrspannung einer gemeinsamen Hilfswicklung (W1) entnommen sind, wobei Entkopplungs-/Gleichrichterdioden (D2; D2') die Flussspannung gleichrichten und zu dem Längsregler (LAB) führen, und weitere Entkopplungs-/Gleichrichterdioden (D4; D4') die Sperrspannung gleichrichten und zu dem Versorgungsspannungsanschluss der Ansteuerschaltung (AST) führen.

4. Sperrwandler nach einem der Ansprüche 1 bis 3, **dadurch gekennzeichnet, dass** der Ausgang des Längsreglers (LAE) mit dem Speicherkondensator (Cs) über eine Entkopplungsdiode (D3) verbunden ist.

## Claims

1. Switching converter in which an input voltage (U_{E}) is able to be switched by means of at least one controlled switch (S) to at least one primary winding (W_{P}) of a transformer, with a control circuit (AST) for controlling the switch, to which a regulating signal (S_{R}) in the sense of a regulation of at least the output voltage is sent, wherein the power supply of the control circuit (AST) is provided on the one hand by the forward voltage of an auxiliary winding (W1) of the transformer, a rectifier (D2), a capacitor (C) and a series regulator (LAE) and on the other hand, starting from the input voltage (U_{E}), via a current path (Rs) and a storage capacitor (Cs)
**characterized in that**
an off-state voltage of the auxiliary winding (W1; W2) which is rectified by means of a rectifier (D4) is provided to the control circuit (AST) as an additional power supply, wherein the rectified off-state voltage of the auxiliary winding is used to supply power to the control circuit during operation as long as the auxiliary winding has a sufficient voltage level.

2. Switching converter in accordance with claim 1,
**characterized in that** a further auxiliary winding (W2) of the transformer (UET) is provided to generate the off-state voltage, with this off-state voltage being used via a rectifier (D4) directly to supply power to the control circuit (AST).

3. Switching converter in accordance with claim 1,
**characterized in that** the forward voltage as well as the off-state voltage are taken from a common auxiliary winding (W1), with uncoupling/rectifier diodes (D2; D2') rectifying the forward voltage and leading to a series regulator (LAE), and additional uncoupling/rectifier diodes (D4; D4') rectifying the off-state voltage and leading to the supply voltage terminal of the control circuit (AST).

4. Switching converter in accordance with one of claims 1 to 3, **characterized in that** the output of the series regulator (LAE) is connected with the storage capacitor (Cs) via an uncoupling diode (D3).

## Revendications

1. Convertisseur indirect, dans lequel une tension (U_{E}) d'entrée peut être appliquée à au moins un enroulement ( W_{P} ) primaire d'un transformateur ( UET ), au moyen d'un commutateur ( S ) commandé, comprenant un circuit ( AST ) de commande pour commander le commutateur, qui envoie un signal ( S_{R} ) de régulation au sens d'une régulation d'au moins la tension de sortie, l'alimentation en tension du circuit ( AST ) de commande s'effectuant, d'une part, par la tension de flux d'un enroulement ( W1 ) auxiliaire du transformateur, par un redresseur ( D2 ), par un condensateur ( C ) et par un régulateur ( LAE ) série et, d' autre part, à partir de la tension ( U_{E} ) d'entrée, par un chemin ( Rs ) de courant et par un condensateur ( Cs ) d'accumulation,
**caractérisé en ce que**
il est envoyé au circuit ( AST ) de commande pour l'alimentation en tension supplémentairement la tension de blocage, redressée au moyen d'un redresseur ( D4 ), d'un enroulement ( W1, W2 ) auxiliaire, la tension de blocage redressée étant mise à profit pendant le fonctionnement pour l'alimentation du circuit de commande tant qu'elle a un niveau de tension suffisant.

2. Convertisseur indirect suivant la revendication 1, **caractérisé en ce qu'**il est prévu un autre enroulement ( W2 ) auxiliaire du transformateur ( UET ) pour la production de la tension de blocage, la tension de blocage étant mise à profit par l'intermédiaire d'un redresseur ( D4 ) directement pour l'alimentation du circuit ( AST ) de commande.

3. Convertisseur indirect suivant la revendication 1, **caractérisé en ce que** la tension de flux ainsi que la tension de blocage sont prélevées d'un enroulement ( W1 ) auxiliaire commun, des diodes ( D2, D2' ) de découplage/de redressement redressant la tension de flux et l'envoyant au régulateur ( LAE ) série et d'autres diodes ( D4, D4' ) de découplage/de redressement redressent la tension de blocage et l'envoient à la borne de la tension d'alimentation du circuit ( AST ) de commande.

4. Convertisseur indirect suivant l'une des revendications 1 à 3, **caractérisé en ce que** la sortie de régulateur ( LAE ) série est reliée au condensateur ( Cs ) d'accumulation par une diode ( D3 ) de découplage.
